# EUROPEAN PATENT SPECIFICATION

(11) **EP 2 686 844 B1**
(45) Date of publication and mention of the grant of the patent: **14.09.2016**
(21) Application number: 12724067.9
(22) Date of filing: 13.03.2012
(51) Int. Cl.: G10H 3/14, G10D 13/02

(54) **DEVICE FOR MEASURING PHYSICAL CHARACTERISTICS AND/OR CHANGES IN PHYSICAL CHARACTERISTICS IN A SHEET MATERIAL AND A SHEET ADAPTED FOR USE WITH SUCH A DEVICE.**
GERÄT FÜR DAS MESSEN PHYSIKALISCHER EIGENSCHAFTEN UND/ODER ÄNDERUNGEN IN PHYSIKALISCHEN EIGENSCHAFTEN IN EINEM FELL-MATERIAL SOWIE EIN FELL GEEIGNET ZUM BENUTZEN MIT EINEM SOLCHEN GERÄT
DISPOSITIF POUR MESURER DES CHARACTÉRISTIQUES PHYSIQUES ET/OU DES CHANGEMENTS DANS DES CHARACTÉRISTIQUES PHYSIQUES DANS UN MATÉRIEL TISSU AINSI QU'UN TISSU ADAPTÉ POUR L'UTILISAGE AVEC UN TEL DISPOSITIF.

(30) Priority: 15.03.2011 US 201161452924 P; 10.05.2011 BE 201100285
(43) Date of publication of application: 22.01.2014
(73) Proprietor: Van Den Broeck, Bram, 2140 Antwerp (BE)
(72) Inventor: Van Den Broeck, Bram, 2140 Antwerp (BE)
(74) Representative: Nederlandsch Octrooibureau
(86) International application number: PCT/BE2012/000013
(87) International publication number: WO 2012/122608

(56) References cited:
- EP-A1- 1 298 641
- WO-A1-2009/110838
- WO-A2-02/065445
- US-A- 4 242 937
- US-A- 5 811 709
- US-A1- 2004 159 223
- US-A1- 2006 219 092

## Description

The present invention relates to a device for measuring physical characteristics, and/or changes in physical characteristics in a substrate sheet or foil material.

The physical characteristics to be measured could be e.g. a static or dynamic tension distribution in the sheet, an elongation in the sheet, a vibration frequency in the sheet and/or one or more physical characteristics of any kind.

A typical application of such a measuring device according to the invention will be for example the measuring of a tension distribution in a percussion instrument head, made for example of a Mylar (PET) film, or the like, with this device.

Such a percussion instrument head may be the head of a drum, conga, bongo or any other head of a percussion instrument.

Also heads of other instruments, for example of a banjo, are not excluded from the invention.

Some devices for measuring physical characteristics of a sheet material and specifically of a percussion instrument head already exist.

For example, in a known device for measuring physical characteristics on a drum head a piezoelectric sensor is placed on or glued onto the drum skin, whether or not in an integrated manner.

This piezoelectric sensor usually produces an electrical signal as a function of a measured pressure or a change in pressure, acceleration or force.

Typically in the known devices, the aim is to detect with the aforementioned piezoelectric sensor when the drum head is struck by a drum stick.

This way of detection is also known as triggering.

In that case an electrical signal is generated by the piezoelectric sensor and this electrical signal is supplied to an electronic controller, for example for producing all kinds of sounds chosen by the user.

However, the known electrical devices for measuring physical characteristics in a head have rather limited possibilities.

First of all, the possibilities for measuring physical characteristics are limited by the type of sensor used.

Furthermore, it is for example impossible to measure a tension distribution in a head with the known electrical devices or methods.

With the known electrical devices it is also impossible to detect the exact position where the drum stick has struck the drum head.

Moreover, the possibilities of the electronic controllers for processing an electrical signal from the sensor on the head, are very limited with the known devices and methods.

A device is known from US 4242937 which discloses a pickup for use with a percussion instrument. The drum diaphragm or head includes a plurality of ferromagnetic members. A pickup coil is located beneath the sheet and can detect movement of the ferromagnetic members relative to the pickup coil. Wires transmit signals from the pickup coil to an amplifier or to a mixer circuit. The pickup coil is moveable for alignment with a given one of the ferromagnetic members.

The present invention aims to provide a solution for one or more of the aforementioned and/or other possible disadvantages.

The present invention aims to provide an improved device for measuring physical characteristics or changes in physical characteristics in a head, which offers at least many more possibilities than the known devices to this end.

To this aim, the invention relates to a device having the features of claim 1.

A first important advantage of such a device for the measuring of physical characteristics or changes in physical characteristics in a sheet material according to the invention is that by choosing a sensor which is not a piezoelectric sensor or by choosing multiple sensors of any type, another physical characteristic or other physical characteristics or changes in said other physical characteristic or characteristics can be measured than with the known devices and methods provided with a single piezoelectric sensor.

Measurement of said other physical characteristic or other physical characteristics or changes in said other physical characteristic or characteristics, allows for the development of new applications.

In a preferred embodiment of a device according to the invention, the multiple sensors, are for example embedded in a multitude of positions in the sheet and/or can be for example of the same or of different types.

An important advantage of such an embodiment of a device according to the invention is that it is possible to obtain a more realistic image of the actual state of the sheet, in static as well as in dynamic conditions, by taking into account multiple measurements.

Also, variations in the surface of the sheet can be taken into account.

In that way, such a measuring device paves the way for multiple new applications.

For example, by measuring the intensity of tension and/or tension distribution in e.g. a drum head, an indication which can be used for tuning the drum head can be obtained.

Such an indication to tune the drum head can for example be produced, based on a measurement of the intensity or the distribution of a tension in the drum head and can for example be an indication as to where the tension in the drum head should be increased or decreased, for example by tightening or loosening one or more of the drum head's tensioning bolts.

In such an application, the signal processing unit is preferably conceived as a device for tuning the drum head or the signal processing unit provides an output signal which can serve as an input signal for a tuning device.

In another application the measurement of a tension distribution in the head over time or the detection of the position of an impact on the head can be linked to sound files stored in a database.

With the intention of better showing the characteristics of the invention, hereafter, as an example without any restrictive character whatsoever, some possible preferable embodiments of devices and sheets, according to the invention are represented with reference to the accompanying figures, wherein:
figure 1 schematically represents a first embodiment of a device according to the invention provided with a single sensor;
figure 2 schematically represents another embodiment of a device according to the invention provided with multiple sensors;
figure 3 represents a perspective view of a drum head, according to the invention and intended to be used according to the invention, with 8 embedded sensors; figure 4 represents a more detailed top view on the part of figure 3 indicated as F4;
figure 5 represents a cross-section along the line 'V-V' in figure 4 through a possible embodiment of a sheet according to the invention and comprised of multiple layers;
figures 6 to 8 schematically represent a top view on circular sheets according to the invention, each sheet being provided with ten sensors at regular distances in relation to each other near a circle at the outer edge of the circular sheet, and the sheets being respectively outfitted with 6, 8 and 10 bolts for tensioning the sheet;
figures 9 tot 11 show how a circular sheet according to the invention can be divided in fields, using a combination of radial and concentric fields; and, figures 12 tot 21 schematically illustrate different modes a head can be struck.

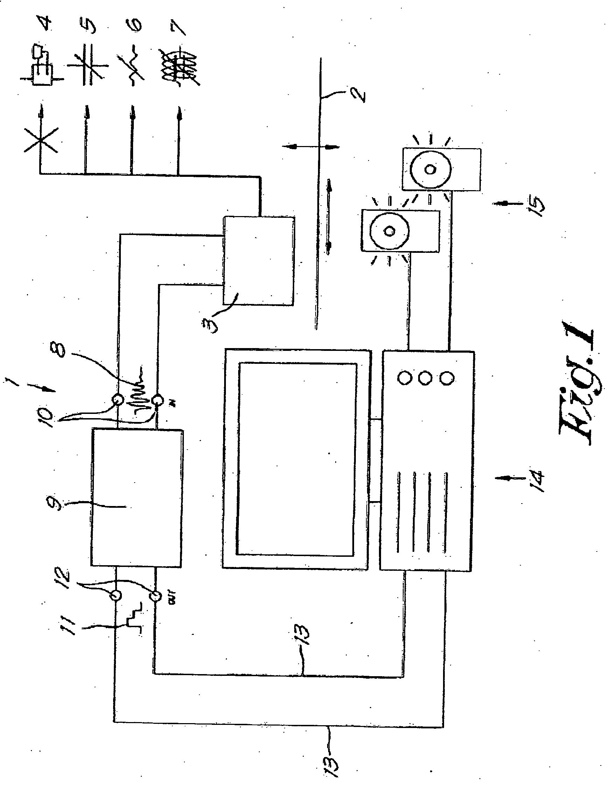

The device according to the invention as represented in figure 1 is meant for measuring physical characteristics or changes in physical characteristics in a sheet 2, for example a movement of the sheet 2, a tension change in sheet 2 or an elongation in sheet 2, or the like, as is symbolically represented by the arrows in figure 1 by sheet 2.

In the embodiment in figure 1 of a device 1 according to the invention, the device has a single sensor 3, of a variable type, but whereby sensor 3 is not a piezoelectric sensor 4.

The sensor 3 can be for example a capacitive sensor 5, a resistive sensor 6 or an inductive sensor 7, but other kinds of sensors 3 for measuring a physical characteristic or a condition of the sheet 2 are by no means excluded.

A summary of different possible kinds of sensors 3 for applications in a device 1 according to the invention with a single sensor 3 is represented by way of illustration in the right hand part of figure 1.

Obviously, sensor 3 needs to be suitable for measuring the physical characteristic or the condition of the sheet 2 to be measured and therefore has to be provided on the sheet 2 or needs to be suitable to be provided on a sheet 2.

Sensor 3 should generate or influence an electrical signal 8 as a function of such a physical characteristic or a change in such a physical characteristic of the sheet 2.

For example, when using a capacitive sensor 5, the first of the capacitor plates can be applied to the top surface of the sheet 2 or to a first sheet layer ((or ply)) of sheet 2 and another capacitor plate can be applied to the bottom surface of the sheet 2 or to another sheet layer (or ply) of sheet 2, so that a vibration of sheet 2 corresponds to a relative movement of the capacitor plates in relation to each other following a local change in thickness of the sheet 2 or following a change in the distance between sheet layers (or plies) of the sheet 2, leading to a measurable change in capacity.

In a similar way, an inductive sensor 7 can be applied according to known techniques, in which case the measured physical characteristic preferably has an effect on the inductive sensor 7, for example because a change of the physical characteristic generates a change in the reluctance of the inductive circuit (for example through a change in the size of an air gap in the inductive circuit), generates eddy currents or generates a voltage by movement in a magnetic field (Hall effect) or the like.

Measurement of an elongation in the sheet 2 can for example be done by gluing or applying a resistive sensor 6 on the sheet 2, whereby a transformation of the sheet 2 generates a transformation and therefore a change in the resistance of the resistive sensor 6.

This is one of the possible ways of measuring the local elongation of the sheet 2 at the position of sensor 3 under the influence of a tension in the sheet 2, but other possibilities are by no means excluded.

Furthermore, the device 1 according to the invention comprises a signal processing unit 9 for processing the electrical signal 8, supplied at an input 10 of the signal processing unit 9 from the sensor 3.

Such a signal processing unit 9 can for example mainly consist of an electronic circuit, or the like, in which the electrical signal 8 of the sensor 3, typically an input voltage 8, is converted at the input 10 of the signal processing unit 9 into an electrical signal 11, typically an output voltage 11, at an output 12 of the signal processing unit 9.

In the shown example, the electrical signal 11 at the output 12 of the signal processing unit 9 is supplied via a cabling 13 to a computer 14, to which a sound system 15 is connected.

The computer 14 can for example be equipped with software to further process the electrical signal 11 of the signal processing unit 9, for example to generate a certain graphic output or to play a certain digitally stored sound file through the sound system 15, as a function of the electrical signal 11.

Obviously, many other embodiments are not excluded.

For example, the signal processing unit 9 can be an integral part of the computer 14 and can for example simply be realized with especially adapted software.

Also, the signal processing unit 9 can for example in itself be conceived as an appliance giving direct indications to the user, for example by means of a display, or e.g. LEDs which directly indicate a readout of the measured physical quantity or for example via a sound signal or the like, all for the purpose of giving indications concerning the tuning of a sheet 2 or the like.

This most essential embodiment of a device 1 according to the invention, as shown in figure 1, already provides a substantial advantage in comparison with known devices because a sensor 3 which is best suited to the measured physical quantity is applied.

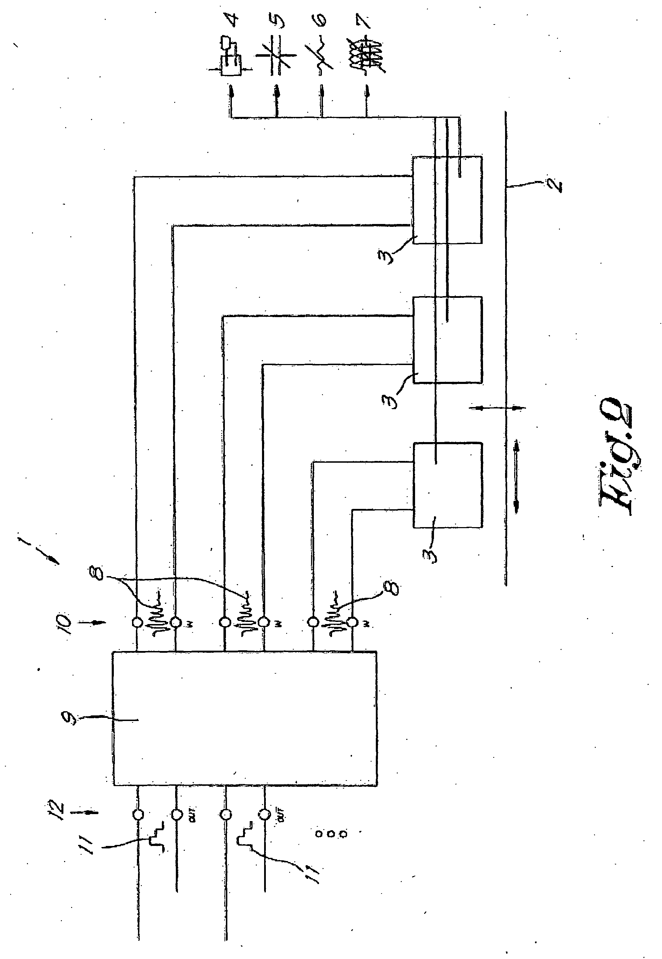

According to a more preferred embodiment of a device 1 according to the invention, as schematically represented in figure 2, multiple sensors 3 of any type, be it of the same type or of a combination of different types of sensors 3, are applied.

For example, one or more piezoelectric sensors 4 can be embedded, whether or not it be in combination with one or more capacitive sensors 5, resistive sensors 6 or inductive sensors 7 etc., as again is represented as an illustration in the right hand part of figure 2.

The multiple sensors 3 all generate or influence an electrical signal 8 as a function of one or other physical characteristic in the sheet 2, as for example a movement of the sheet 2 at a certain position or a change in tension or an elongation at a certain position in the sheet 2 and the like.

In which case, as in the shown embodiment in figure 2, the sensors 3 are all connected with one or multiple inputs 10 of a signal processing unit 9, whereby the given electrical signals 8 are converted in the signal processing unit 9 into one or more electrical signals 11 in one or multiple outputs 12 in the signal processing unit 9.

A device 1 according to the invention is preferably conceived so that an electrical signal 8 or a combination of multiple electrical signals 8, generated or influenced by the sensors 3, provides or provide a measure for at least one of the following characteristics:
- an elongation of the sheet 2,
- a static tension distribution over the sheet 2,
- a dynamic tension distribution over the sheet 2,
- a tension change in the sheet 2 or a frequency change in the sheet 2,
- a position in the sheet 2 of a tension change,
- a distribution of a tension change in the sheet 2,
   and/or
- a vibration frequency in the sheet 2.

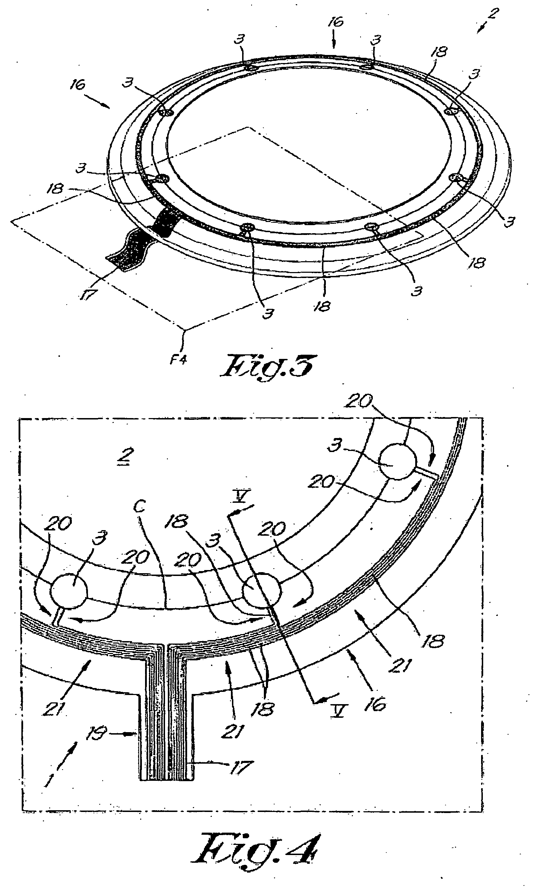

Figure 3 represents a perspective view of a sheet 2 according to the invention, which is entirely adapted for the use in a device according to the invention, as described before and as schematically represented in figures 1 and 2.

The sheet 2 according to the embodiment in figure 3 is a circular membrane of the head 2 of a percussion instrument provided with multiple sensors 3, in the given case eight sensors 3, embedded in the sheet 2 with the purpose of measuring at least one or multiple physical characteristics or changes in physical characteristics in the sheet 2.

The sensors 3 and, extensively, also the sheet 2, are conceived as a part of a device 1 according to the invention.

The sensors 3 are placed at regular intervals in relation to each other on a circle C, near the outer edge 16 of the circular sheet 2.

The sheet 2 further comprises a connector 17 to connect the sheet 2 with a signal processing unit 9 of a device 1 according to the invention, as described before, whereby this signal processing unit is meant to process electrical signals 8 that are supplied to the signal processing unit 9 from the sensors 3.

In this case, each sensor 3 is connected to a single connector 17, which is provided at a given position near the outer edge 16 in the sheet 2, whereby the connection between the sensors 3 and the connector 17 is realized by making use of electrically conductive material 18, which is applied onto the sheet 2 in the form of lines, strips or areas.

In the shown example in figure 3 (illustrated in further detail in figure 4), each connection between a sensor 3 on the sheet 2 and the connector 17 is realized by a pair of adjacent traces of electrically conductive material 18, of which a part 19 in the connector 17 stretches out of the sheet 2 in radial fields, of which a part 20 in the position of the regarded sensor 3 also stretches out in radial fields from the regarded sensor 3 and of which an intervening part 21 is applied concentrically near the outer edge 16 of the sheet 2.

To use the available space near the outer edge 16 of the sheet 2 as efficiently as possible, the concentric parts 21 of the traces of electrically conductive material 18 of the sensors 3 closest to the connector 17, are placed radially inwards on the sheet 2.

The concentric parts 21 of the traces of electrically conductive material 18 of the following sensors 3, are applied gradually and radially more outward, so that the concentric parts 21 of the traces of electrically conductive material 18 of consecutive sensors 3 can be close together and so that the radial parts 19 and 20 can continue until the connector 17 and to the regarding sensor 3 without having to cut the traces of electrically conductive material 18 of adjacent sensors 3.

Until now, when discussing the traces of conductive material 18, it has been implicitly assumed that the sheet 2 consists of a single sheet layer (or ply) and that the.sensors are applied on one side of this sheet layer.

In this set up, the traces of conductive material 18 are separated from each other by a dielectric, for example an insulator layer, consisting of a polymer.
A capacitive sensor 5, applied to a single side of a single sheet layer, could consist of the following:
- the sheet 2 as a substrate;
- on which on one side, a first layer of electrically conductive material 18 is applied to form a first electrode of the sensor 5;
- this first electrically conductive layer 18 is covered by a dielectric insulation layer that is formed by e.g. a polymer;
- on which then a second layer of electrically conductive material 18 is applied.

According to the invention, this is not necessarily the case and it is perfectly possible to manufacture the sheet 2 with multiple sheet layers (or plies) and to embed sensors 3 in more than one side of a sheet layer of the sheet 2.

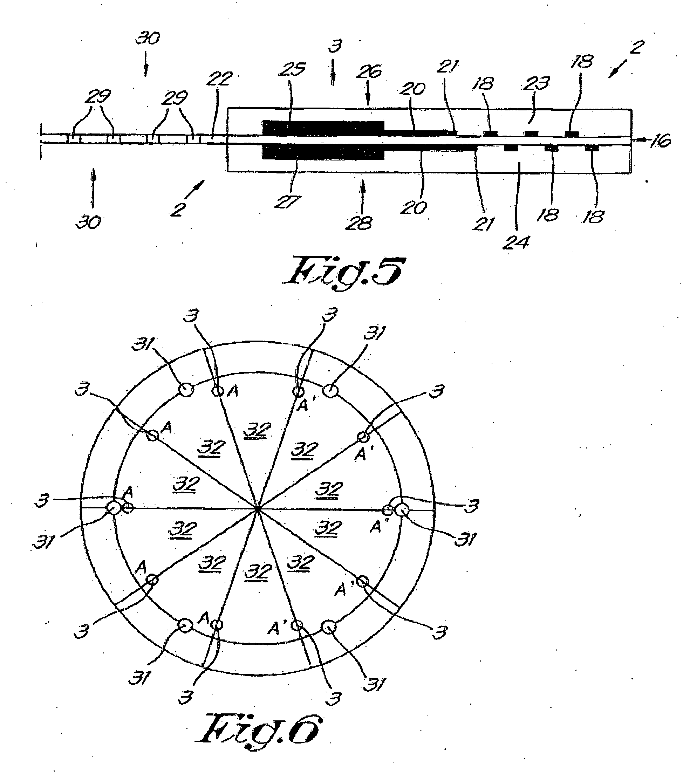

In the cross section in figure 5 such a sheet 2, made up of different sheet layers (or plies), is represented.

More specifically, the sheet 2 in the shown example consists of an intervening sheet layer (or ply) 22 which is provided with a top sheet layer (or ply) 23 and a bottom sheet layer (or ply) 24 near the outer edge 16 of the sheet 2.

In this case, the top sheet layer (or ply) 23 and the bottom sheet layer (or ply) 24 are formed by a circular strip so that when the sheet 2 is stretched onto a percussion instrument, during normal use, in this embodiment only the intervening sheet layer (or ply) 22 will be struck.

According to the invention, application of more or fewer sheet layers (or plies) that span all of the intervening and/or other sheet layers (or plies) is of course not excluded.

In the embodiment as shown in figure 5 of a sheet 2 according to the invention, each sensor 3 is conceived as a capacitive sensor 5, whereby each sensor 3 has an electrically conductive part 25 applied to a first side 26 of an intervening sheet layer (or ply) 22, as well as an electrically conductive part 27 which is applied to the other side 28 of the intervening sheet layer (or ply) 22.

These electrically conductive parts 25 and 27 of each sensor 3 are connected to the connector 17 of the sheet 2 via a trace of electrically conductive material 18.

The intervening sheet layer (or ply) 22 hereby forms a dielectric and therefore electrically insulating part that separates the two electrically conductive parts 25 and 27.

The top sheet layer (or ply) 23 and the bottom sheet layer (or ply) 24 are also made up of a dielectric and function as a protection of the sensor parts 25 and 27, as well as the traces of electrically conductive material 18.

In a similar way, other types of sensors 3 can of course be realized by applying one or more areas of electrically conductive material 18 onto the sheet 2 or on one or multiple sheet layers (or plies) of the sheet 2.

In this case, the sheet 2 is also partly provided with meshes, perforations, cutouts, apertures, holes 29 or, in other words, it is at least partly provided with a net shaped structure, meshed structure, perforated structure or woven structure or the like.

More specifically, the intervening sheet layer (or ply) 22 in the example in figure 5 is provided with such meshes, perforations, cutouts, holes or apertures 29 in the circular part which stretches out to the radial outer part with the sensors 3 and which is meant to be struck during the use of the sheet 2 in a percussion instrument.

The purpose of the holes or apertures 29 is to prevent or to limit as well as possible the production of sound or the movement of air caused by vibration as a typical consequence of striking the sheet 2 with e.g. a drum stick or the like.

In a possible application thereof the sensors 3 on the sheet 2 are used to play a sound file when a drum stick strikes the sheet 2, for example through headphones.

This way, it can be made possible for a percussionist to play percussion while no or a rather limited sound level is produced so that other people will not be disturbed while the percussionist can still perceive a sound through a set of headphones, comparable to the sound produced when playing a traditional percussion instrument.

Also, it is important to note that in the example in figure 5 the intervening sheet layer (or ply) 22 is partly provided with meshes, perforations, cutouts, apertures or holes 29 or of a net shaped structure, while sheet layers (or plies) 23 and 24 have no meshes, perforations, apertures or holes 29 or no net shaped structure, in as far as the central circular aperture 30 in sheet layers (or plies) 23 and 24 is not considered to be a mesh, perforation, cutout, aperture or hole 29.

Sensors 3 are then embedded between the part of intervening sheet layer (or ply) 22 showing no meshes, perforations, cutouts, apertures or holes 29 or which has no net shaped structure and such sheet layers (or plies) 23 and 24 that also do not have meshes, perforations, cutouts, apertures or holes 29, so that a good vibration transmission or transmission of the transformation of the regarded sheet layers (or plies) 22 to 24 is assured and the sheet layers (or plies) 23 and 24 are provided with a central circular aperture spanned by a meshed intervening sheet layer (or ply) 22, or a sheet layer (or ply) 22 with a net shaped structure or a sheet layer (or ply) 22 with perforations, apertures, holes or cutouts 29 to obtain a noiseless striking surface for a percussionist's drum stick.

Naturally, an embodiment as shown in the cross section of figure 5 is but one of many possibilities.

For example, the sheet 2 can very well consist of more or fewer sheet layers (or plies), whether or not provided with a circular aperture and/or net shaped structure.

Also, individual sensors 3 can be embedded in multiple layers of the sheet 2 by means of possibly partly overlapping areas of electrically conductive material 18, separated by a dielectric, and sensors 3 in relation to each other and traces of electrically conductive material 18 in relation to each other can be applied on several layers.

The sheet 2 or sheet layers (or plies) of the sheet 2 can function as a dielectric to separate traces, lines, strips or areas of electrically conductive material 18, but for such a separation materials that can function as a dielectric and which are especially applied for this purpose onto the sheet 2 or sheet layers (or plies) of the sheet 2 can also be used.

Furthermore, multiple sensors 3 on a sheet 2 can be configured otherwise than described before, for example by connecting sensors 3 to each other in series or parallel by traces, or the like, of electrically conductive material 18 applied to the sheet 2 or to one or multiple sheet layers (or plies) of the sheet 2.

According to a preferred embodiment of a sheet 2 according to the invention the sheet 2 is made of synthetic material.

According to a yet more preferred embodiment of a sheet 2 in accordance with the invention the sheet 2 is made of biaxially-oriented polyethylene terephthalate (boPET).

However, as an alternative and according to the invention, it is not excluded to make the sheet 2 of leather, as is common in percussion instruments, or of any other material suitable for the suggested application.

For the lines, strips, traces or areas of electrically conductive material 18, a metallic material for example can be used.

Another possibility is to manufacture the lines, strips, traces or areas of electrically conductive material 18, of an electrically conductive, organic, polymer material.

An electrically conductive, organic, polymer material that according to the invention is especially suited, is Poly(3,4-ethylenedioxythiophene)poly-cation, also known as PEDOT.

Naturally, other materials for manufacturing the electrically conductive material 18 are not excluded.

The pattern formed by the strips or areas of electrically conductive material 18 can for example be printed or ink- jet printed on the sheet 2, for example by using flexographic printing technique, offset printing technique, rotary screen printing technique or roll to roll printing, inkjet printing, or any other suitable printing technique.

An advantage to the use of printing techniques is that it creates the possibility of printing in an economical way and in large quantities.

By printing on a roll, the production cost can be minimized.

The used printing techniques need to be adapted so that they can realize electronic circuitry and are preferably optimized to this end.

In these printing techniques therefore, an especially adapted resolution and high precision or accuracy is applied and adapted printing inks are used, in order to obtain a finished product with the suitable electrical characteristics for the regarded application, for example in a percussion instrument head.

An advantage of the application of a flexographic printing method is that this printing method comprises a high pressure printing process which is very suitable for printing on synthetic substrates.

An offset printing method is a flat (planographic) printing method that allows a high resolution.

An engraving printing method is a low pressure printing method, whereby organic dissolvents can be used and which is suitable for the production of large quantities.

Rotary screen printing is a printing method that allows printing in relatively thick layers.

Additionally, there are so called coating methods, which is a generic name for a diversity of methods whereby homogeneous and thin covering-layers can be applied to a substrate.

With this alternative method strips, traces, lines or areas can be coated on the sheet, for example by applying so called Physical Vapour Deposition (PVD), by applying so called Chemical Vapour Deposition (CVD), by applying so called Atomic Layer Deposition (ALD) or by applying a Sputter coating technique etc.

Yet other techniques for the application of traces, strips, areas and the like, consisting of electronically conductive material 18 are not excluded according to the invention.

According to an alternative embodiment of a sheet 2 or device 1 according to the invention, an electrical signal 8 is generated by at least one of the sensors 3 which is not directly supplied to the signal processing unit 9 via a connector 17, or in any case not by means of direct physical contact, but the transmission happens at least partly by means of a wireless connection, meaning by transmission of electromagnetic radiation.

In such a case, all the electrical signals 8 which are generated or influenced by the sensors 3 are preferably supplied to the signal processing unit 9 from a single connector 17 by means of a wireless connection.

It is obvious that such an embodiment provides many advantages given the measuring on the sheet 2, usually in the percussion instrument, and the processing of the measuring results in individual positions and even in positions moving in relation to each other can happen without being hindered by cabling or the.like, allowing the user much more freedom of movement.

In yet another embodiment of a sheet 2 or device 1 according to the invention, the sensors 3 on the sheet 2 are fed by transducers which convert mechanical energy into electrical energy.

Such an embodiment allows a lot of autonomy to the sensors 3 and is even more suitable for an aforementioned application with a wireless connection, given the fact that no cabling is required for the electrical feed of the sensors 3.

A device 1 according to the invention, whether or not realized with a sheet 2 according to the invention as described before, can be used for all kinds of applications.

The signal processing unit 9 is preferably conceived in such a way that the electrical signals 8 supplied to the signal processing unit 9 are processed while creating an output in one or more of the following forms or a combination thereof:
- the output is an electrical signal 11 as a function of the intensity of an impact on the sheet 2;
- the output is an electrical signal 11 as a function of a change of intensity or a change of vibration frequency of the sheet 2;
- the output is an electrical signal 11 as a function of the position of an impact on the sheet 2;
- the output is a sound or signal as a function of a tension distribution or change in the tension distribution in the sheet 2;
- the output is an indication concerning the tension distribution in the sheet 2 used for the tuning of the sheet 2; or,
- the output is an indication concerning the amount of static tension in the sheet 2 used for the tuning of the sheet 2.

An interesting embodiment of a device 1 according to the invention has for example a signal processing unit 9 which generates an output that is suitable for sampling or modulation.

Yet another interesting embodiment of a device 1 according to the invention has for example a signal processing unit 9 which generates an output that is suitable to be linked to a database of a computer 14 in which sound fragments have been stored.

Naturally, many other applications are not excluded from the invention.

According to the invention, the electrical signals 8 generated or influenced by the sensors 3 preferably and directly or in combination, supply information about the condition of the sheet 2 in certain areas of the sheet 2 and the signal processing unit 9 is preferably provided with software or algorithms or the like for processing the electrical signals 8 in order to link the measurements by the sensors 3 to the physical characteristics in these specific zones of the sheet 2.

Figures 6 to 8 schematically represent a number of cases of a possible positioning of the sensors 3 in a drum head 2 which is stretched by means of tensioning bolts 31 to illustrate what the consequences are for the division of the drum head 2 in zones 32 in the form of circular sectors 32.

In each of these cases, ten sensors 3 are provided near the outer edge 16 of the sheet 2 on the lines AA'.

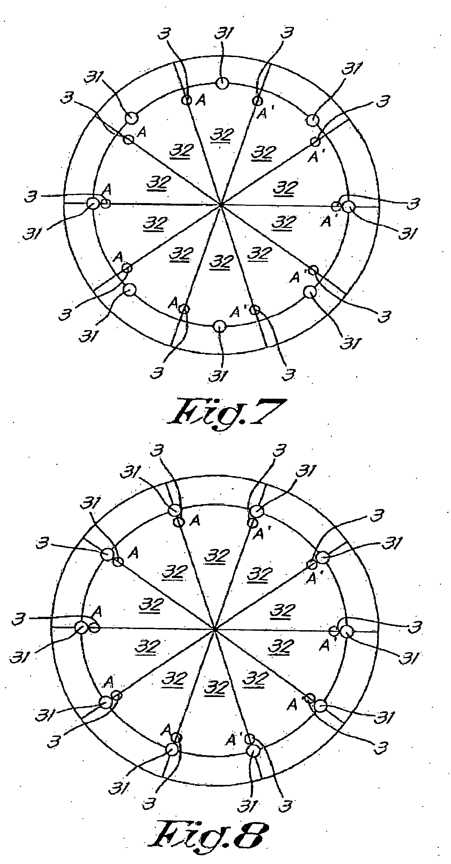

In figure 6 the sheet 2 is stretched by means of six tensioning bolts 31, while in figures 7 and 8 respectively eight and ten bolts 31 were used.

A first application can be the use of the measurements supplied by the sensors 3 for the tuning of the sheet 2.

Measurement via the sensors 3 of the vibration frequency of the sheet 2 as well as a static capacity in the regarded position, allows the definition of the general tone produced by the sheet 2 when it is struck and it allows the indication of which of the tensioning bolts 31 needs to be tightened or loosened to obtain the right tone and an even tension in the sheet 2.

It is obvious that in the cases of figures 6 and 7, measurements of several sensors 3 near the concerned tensioning bolt 31 need to be combined in order to obtain the information concerning certain tensioning bolts 31, for example by performing a mathematical interpolation, while this is not necessarily so in the case as represented in figure 8.

Furthermore, based on the different sensors 3, it is possible to define where the zone 32 is struck or where the zones 32 are struck in the sheet 2.

This kind of information can for example be linked to the sound recordings of other percussion instruments which are struck in the same way, via the signal processing unit 9.

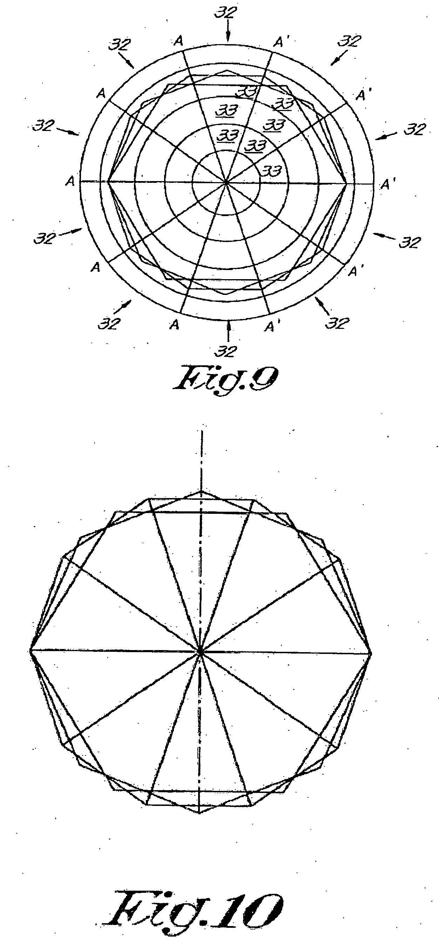

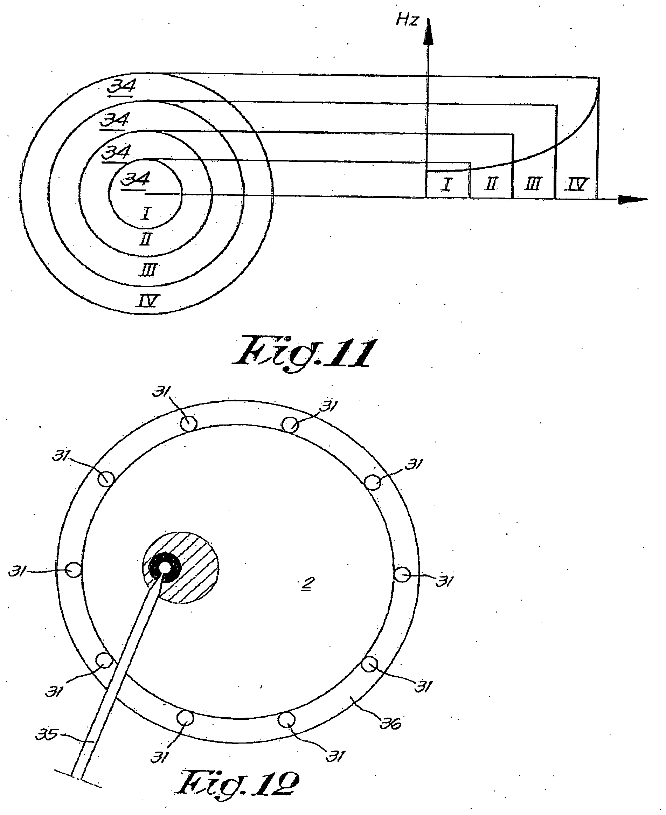

Figures 9 to 11 illustrate that more accurate fields 33 on a circular sheet 2 can be defined, given the fact that through a frequency measurement of the vibrating sheet 2 for example four concentric zones 34 also can be defined (see figure 11), which in combination with the ten zones 32 in the form of circle sectors, adds up to a total of forty fields 33, on which information can be supplied by measuring with the sensors 3.

It is obvious that in this way, a device 1 according to invention allows that a much more realistic image can be created of the status of the sheet 2, which, as suggested in the introduction, paves the way for many new applications.

Figures 12 to 21 further illustrate a number of modes according to which a sheet 2 can be struck.

Following the above explanation, it can be concluded that a device 1 according to the invention allows the distinction of these different modes of striking, based on the signals 8 supplied by the sensors 3.

In the figures 12 to 14, the sheet 2 is activated by striking it with a drum stick 35, respectively out of the center, in the center and near the outer edge of the sheet 2.

In the case of figure 12, a higher pitched tone is obtained compared to a strike on the sheet 2 in the center, whereby next to the keynote, also more overtones, the so called harmonics, are activated.

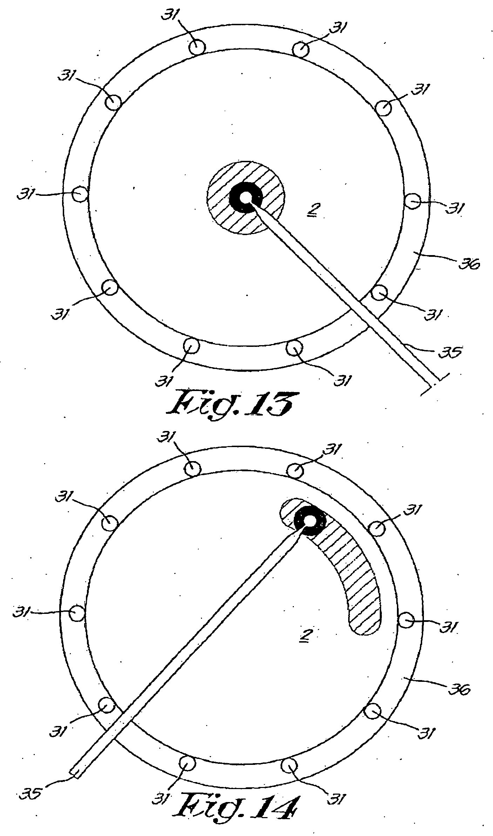

In the case in figure 13, a balanced tone is obtained, with fewer harmonics.

The case in figure 14 generates the highest pitched tone of the three striking modes according to figures 12 to 14, whereby the harmonics are emphasized.

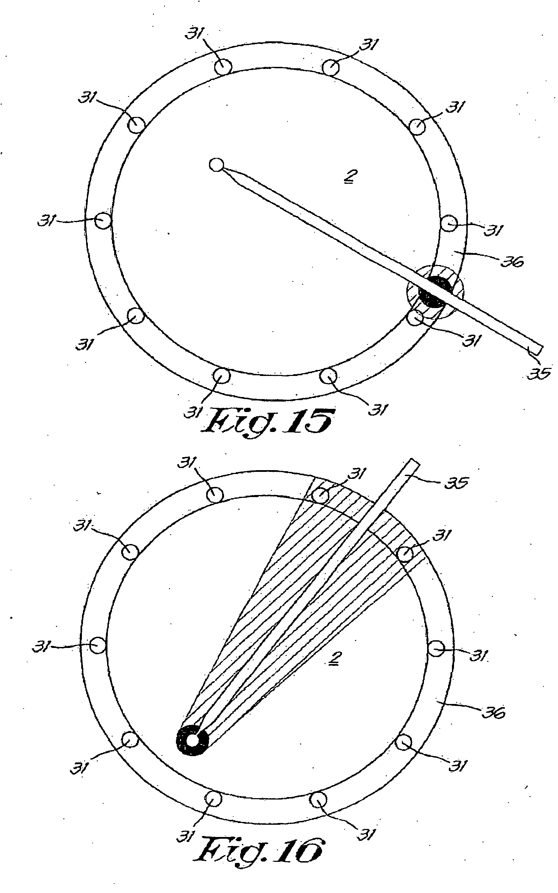

In figures 15 to 17 a number of striking modes is represented whereby the rim 36 of the drum is activated whether or not in combination with an activation of the sheet 2 itself.

In figure 15, the drum stick 35 only activates this rim 36, producing a high pitched, dry tone with a clearly defined striking of the rim 36.

In the case as represented in figure 16, the tip of the drum stick 35 is resting on the sheet 2, while the rim 36 of the drum is struck with drum stick 35.

This produces a warm tone in combination with a woody click on the rim 36.

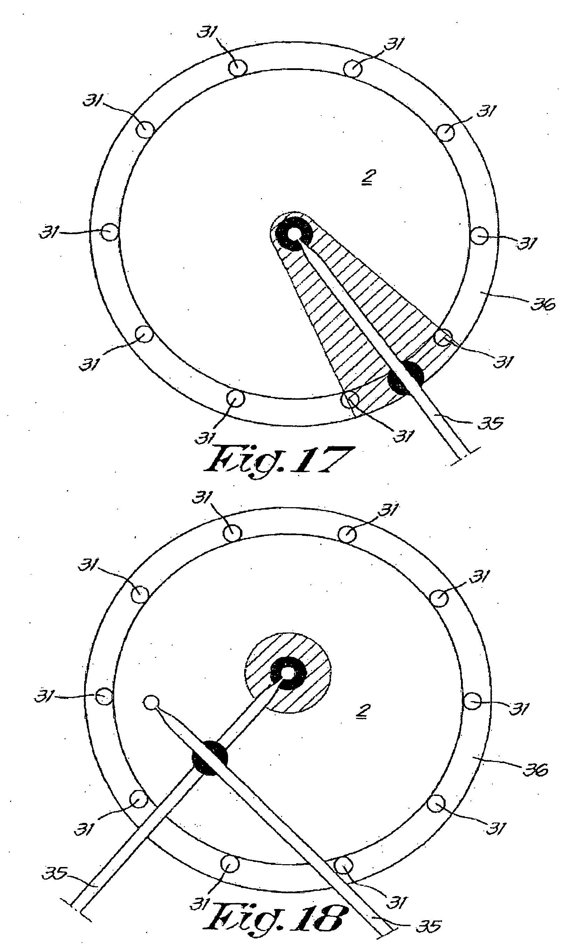

In figure 17, the sheet 2 is struck with the tip of drum stick 35, instead of resting on it like in the case of figure 16, while the rim 36 of the drum is also tapped by the drum stick 35.
This results in a sharp, high pitched sound.

In the case represented in figure 18, the sheet 2 is pressed with the tip of a first drum stick 35, while a second drum stick 35 taps the first drum stick 35.

The result is a high pitched tone, activating many harmonics.

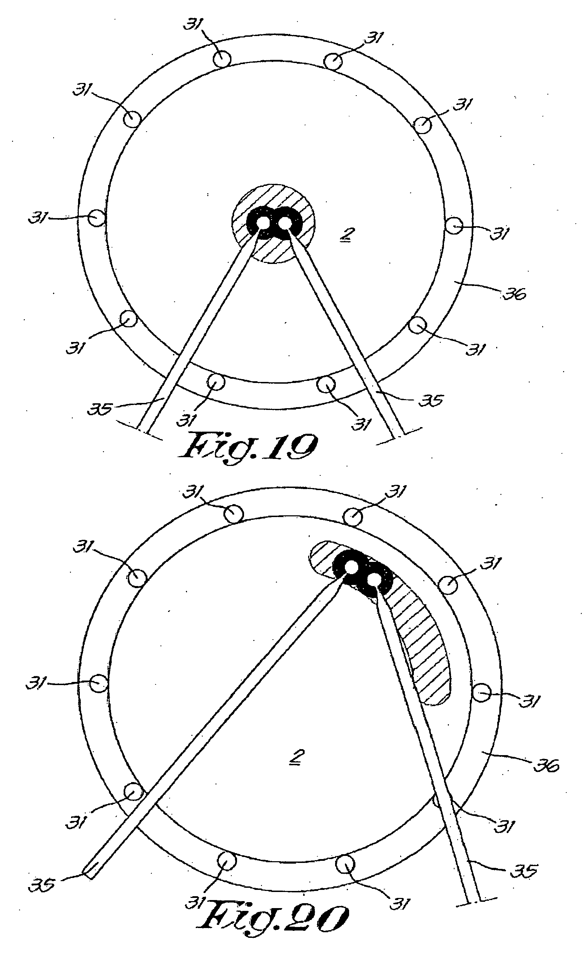

Figure 19 illustrates a roll with two drum sticks 35 in the center of the sheet 2, while figure 20 shows a similar roll with two drum sticks near the rim 36.

In the first case in figure 19, a balanced tone is produced, activating few harmonics, while in the case represented in figure 20, the result is a higher pitched tone with more emphasized harmonics.

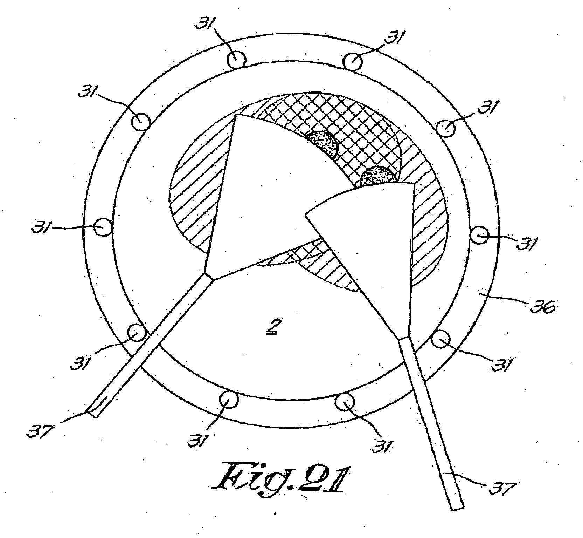

Finally, figure 21 represents a situation in which the sheet 2 is activated by two drum brushes 37, whereby the first drum brush 37 is pressed against the sheet 2 and moves back and forth on the sheet 2, while the second drum brush 37 gently strikes the sheet 2.

The result is a dry, muffled sound, a whispered ruffle, whereby the sheet 2 is struck in a rather unpronounced manner.

The detection of the striking modes and possibly other modes by a device 1 according to the invention as described above, can for example be used in combination with a sheet 2 provided with a sheet layer (or ply) 22 with meshes, perforations, cutouts, apertures or holes 29, so that a drummer can hear a genuine drumming sound through a set of headphones without making too much ambient noise.

The present invention is by no means limited to the embodiments, described above as examples and illustrated in the figures, of a device 1 according to the invention for the measuring of physical characteristics or changes in physical characteristics in a sheet 2 and a sheet 2 which is adapted to the use of such a device 1 but such a device 1 and such a sheet 2 according to the invention can be realized in many forms and dimensions without abandoning the scope of the invention.

## Claims

1. Sheet (2), provided with multiple sensors (3) comprising a resistive sensor (6), a capacitive sensor (5) and/or an inductive sensor (7), said sensors (3) being embedded in the sheet (2) for measuring one or more physical characteristics or changes in physical characteristics in the sheet (2), whereby the sensors (3) are suitable for generating or influencing an electrical signal (8) as a function of a measured physical characteristic or a change in a physical characteristic, whereby the sheet (2) also comprises at least one connector (17) to connect the sheet (2) with a signal processing unit (9) conceived for processing the electrical signal (8) supplied to the signal processing unit (9) from the sensors (3), said electrical signal providing a measure for at least a characteristic including a vibration frequency in the sheet.

2. The sheet according to claim 1 or 2, **characterized in that** electrical signal (8), provides a measure for at least one of the following characteristics:
- an elongation of the sheet (2);
- a static tension distribution in the sheet (2);
- a dynamic tension distribution in the sheet (2);
- a change in the tension in the sheet (2) or a frequency change in the sheet (2);
- a position of a tension change on the sheet (2);
- a distribution of a tension change in the sheet (2).

3. The sheet (1) according to one or more of the previous claims, wherein at least some of the sensors (3) are connected to at least one connector (17), provided in a certain location on the sheet (2), whereby the connection is made by means of electrically conductive material (18) which is applied to the sheet (2) in lines, strips or areas.

4. The sheet according to claim 3, wherein the lines, strips or areas of electrically conductive material (18) consist of a metallic material or are made from electrically conductive, organic, polymer material.

5. The sheet (1) according to one or more of the previous claims, wherein the sheet is circular and the sensors (3) are located at regular intervals in relation to each other on a circle (C) near the outer edge (16) of the circular sheet (2).

6. The sheet of any one of the preceding claims which is at least partly provided with meshes, holes, cutouts, apertures or a net-shaped structure.

7. The sheet of any one of the preceding claims comprising multiple sheet layers or plies.

8. The sheet of claim 7 wherein at least one sheet layer is at least partly provided with meshes, holes, cutouts, apertures or a net-shaped structure.

9. The sheet of any one of the preceding claims wherein at least one sensor is a capacitive sensor.

10. The sheet of any one of the preceding claims wherein the sensors are fed by transducers that convert mechanical energy to electrical energy.

11. The sheet of any one of the preceding claims when used as a head of a percussion instrument.

12. Device (1) comprising a sheet according to one or more of the previous claims and a signal processing unit (9) for processing the electrical signal (8) supplied to the signal processing unit (9) from the sensors (3), preferably at least partly by a wireless connection.

13. Device (1) according to claim 12, wherein the electrical signals (8) supplied to the signal processing unit (9) are processed in a way so as to create an output in one or more of the following forms or a combination thereof:
- the output is a signal (11) as a function of the intensity of an impact on the sheet (2);
- the output is a signal (11) as a function of an change in intensity or in the frequency of the vibration in the sheet (2);
- the output is a signal (11) as a function of the position of an impact on the sheet (2);
- the output is a sound or signal as a function of the tension distribution or a change in the tension distribution in the sheet (2);
- the output is an indication concerning the tension distribution in the sheet (2) used for the tuning of the sheet (2); or,
- the output is an indication concerning the amount of static tension in the sheet (2), used for the tuning of the sheet (2).

## Patentansprüche

1. Membran (2), die mit einer Vielzahl von Sensoren (3) bereitgestellt ist, die einen Widerstandssensor (6), einen kapazitiven Sensor (5) und/oder einen induktiven Sensor (7) aufweist, wobei die Sensoren (3) in die Membran (2) zum Messen einer oder mehrerer physikalischer Charakteristiken oder Änderungen der physikalischen Charakteristiken der Membran (2) eingebettet sind, wobei die Sensoren (3) zum Erzeugen oder Beeinflussen eines elektrischen Signals (8) als eine Funktion einer gemessenen physikalischen Charakteristik oder einer Änderung einer physikalischen Charakteristik geeignet sind, wobei die Membran (2) außerdem wenigstens einen Anschluss (17) zum Verbinden der Membran (2) mit einer Signalverarbeitungseinheit (9) aufweist, die zum Verarbeiten des elektrischen Signals (8) konzipiert ist, das der Signalverarbeitungseinheit (9) von den Sensoren zugeführt wird, wobei das elektrische Signal ein Maß für wenigstens eine Charakteristik, die eine Vibrationsfrequenz in der Membran umfasst, bereitstellt.

2. Membran nach Anspruch 1 oder 2, **dadurch gekennzeichnet, dass** das elektrische Signal (8) ein Maß für wenigstens eine der folgenden Charakteristiken bereitstellt:
- eine Dehnung der Membran (2);
- eine statische Spannungsverteilung in der Membran (2);
- eine dynamische Spannungsverteilung in der Membran (2);
- eine Änderung der Spannung der Membran (2) oder eine Frequenzänderung der Membran (2);
- eine Position einer Spannungsänderung auf der Membran (2);
- eine Verteilung einer Spannungsänderung der Membran (2).

3. Membran nach einem oder mehreren der vorherigen Ansprüche, wobei wenigstens einige der Sensoren (3) mit wenigstens einem Anschluss (17) verbunden sind, der an einem bestimmten Ort auf der Membran (2) bereitgestellt ist, wobei die Verbindung mittels elektrisch leitendem Material (18) hergestellt wird, das auf die Membran (2) in Linien, Streifen oder Flächen angebracht ist.

4. Membran nach Anspruch 3, wobei die Linien, Streifen oder Flächen aus elektrisch leitendem Material (18) aus metallischem Material bestehen oder aus elektrisch leitendem, organischem Polymermaterial hergestellt sind.

5. Membran (1) nach einem oder mehreren der vorherigen Ansprüche, wobei die Membran kreisförmig ist und die Sensoren (3) in gleichmäßigen Intervallen in Beziehung zueinander auf einem Kreis (C) nahe der äußeren Kante (16) der kreisförmigen Membran (2) positioniert sind.

6. Membran nach einem der vorherigen Ansprüche, die wenigstens teilweise mit Netzen, Löchern, Ausschnitten, Öffnungen oder einer netzförmigen Struktur bereitgestellt wird.

7. Membran nach einem der vorherigen Ansprüche, die eine Vielzahl von Membranschichten oder Lagen aufweist.

8. Membran nach Anspruch 7, wobei wenigstens eine Membranschicht wenigstens teilweise mit Netzen, Löchern, Ausschnitten, Öffnungen oder einer netzförmigen Struktur bereitgestellt wird.

9. Membran nach einem der vorherigen Ansprüche, wobei wenigstens ein Sensor ein kapazitiver Sensor ist.

10. Membran nach einem der vorherigen Ansprüche, wobei die Sensoren durch Transducer gespeist werden, die mechanische Energie in elektrische Energie umwandeln.

11. Membran nach einem der vorherigen Ansprüche, wenn sie als Schwingungsmembran eines Schlaginstrumentes verwendet wird.

12. Vorrichtung (1), die eine Membran nach einem oder mehreren der vorherigen Ansprüche und eine Signalverarbeitungseinheit (9) zum Verarbeiten des elektrischen Signals (8) aufweist, das der Signalverarbeitungseinheit (9) von den Sensoren (3), bevorzugt wenigstens teilweise durch eine kabellose Verbindung, zugeführt wird.

13. Vorrichtung (1) nach Anspruch 12, wobei die elektrischen Signale (8), die der Signalverarbeitungseinheit (9) zugeführt werden, in einer Art und Weise verarbeitet werden, um eine Ausgabe in einer oder mehrerer der folgenden Formen oder einer Kombination daraus zu erzeugen:
- die Ausgabe ist ein Signal (11) als eine Funktion der Intensität eines Aufpralls auf der Membran (2);
- die Ausgabe ist ein Signal (11) als eine Funktion einer Änderung der Intensität oder der Frequenz der Vibration der Membran;
- die Ausgabe ist ein Signal (11) als eine Funktion der Position eines Aufpralls auf der Membran (2);
- die Ausgabe ist ein Klang oder Signal als eine Funktion der Spannungsverteilung oder einer Änderung der Spannungsverteilung der Membran (2);
- die Ausgabe ist ein Indiz bezüglich der Spannungsverteilung der Membran (2), das zum Stimmen der Membran (2) verwendet wird; oder
- die Ausgabe ist ein Indiz bezüglich der Menge der statischen Spannung der Membran (2), das zum Stimmen der Membran (2) verwendet wird.

## Revendications

1. Feuille (2), pourvue de multiples capteurs (3) comprenant un capteur résistif (6), un capteur capacitif (5) et/ou un capteur inductif (7), lesdits capteurs (3) étant intégrés dans la feuille (2) pour mesurer une ou plusieurs caractéristiques physiques ou une ou plusieurs variations de caractéristiques physiques dans la feuille (2), moyennant quoi les capteurs (3) sont appropriés pour générer ou influencer un signal électrique (8) en fonction d'une caractéristique physique mesurée ou d'une variation d'une caractéristique physique, moyennant quoi la feuille (2) comprend également au moins un connecteur (17) pour connecter la feuille (2) à une unité de traitement de signal (9) conçue pour traiter le signal électrique (8) fourni à l'unité de traitement de signal (9) à partir des capteurs (3), ledit signal électrique fournissant une mesure pour au moins une caractéristique comprenant une fréquence de vibration de la feuille.

2. Feuille selon la revendication 1 ou 2, **caractérisée en ce qu'**un signal électrique (8) fournit une mesure pour au moins l'une des caractéristiques suivantes :
- un allongement de la feuille (2) ;
- une distribution de tension statique dans la feuille (2) ;
- une distribution de tension dynamique dans la feuille (2) ;
- une variation de la tension dans la feuille (2) ou une variation de fréquence dans la feuille (2) ;
- une position d'une variation de tension sur la feuille (2) ;
- une distribution d'une variation de tension dans la feuille (2).

3. Feuille (1) selon une ou plusieurs des revendications précédentes, dans laquelle au moins certains des capteurs (3) sont connectés à au moins un connecteur (17), prévu à un certain emplacement sur la feuille (2), moyennant quoi la connexion est effectuée au moyen d'un matériau électriquement conducteur (18) qui est appliqué à la feuille (2) en des lignes, des bandes ou des zones.

4. Feuille selon la revendication 3, dans laquelle les lignes, les bandes ou les zones de matériau électriquement conducteur (18) consistent en un matériau métallique ou sont réalisées à partir d'un matériau électriquement conducteur, organique, polymérique.

5. Feuille (1) selon une ou plusieurs des revendications précédentes, dans laquelle la feuille est circulaire et les capteurs (3) sont situés à des intervalles réguliers les uns par rapport aux autres sur un cercle (C) à proximité du bord extérieur (16) de la feuille circulaire (2).

6. Feuille selon l'une quelconque des revendications précédentes qui est au moins partiellement pourvue de mailles, de trous, de découpes, d'ouvertures ou d'une structure en forme de filet.

7. Feuille selon l'une quelconque des revendications précédentes comprenant de multiples couches ou épaisseurs de feuille.

8. Feuille selon la revendication 7, dans laquelle au moins une couche de feuille est au moins partiellement pourvue de mailles, de trous, de découpes, d'ouvertures ou d'une structure en forme de filet.

9. Feuille selon l'une quelconque des revendications précédentes, dans laquelle au moins un capteur est un capteur capacitif.

10. Feuille selon l'une quelconque des revendications précédentes, dans laquelle les capteurs sont alimentés par des transducteurs qui convertissent l'énergie mécanique en énergie électrique.

11. Feuille selon l'une quelconque des revendications précédentes lorsqu'elle est utilisée en tant que peau d'un instrument de percussion.

12. Dispositif (1) comprenant une feuille selon une ou plusieurs des revendications précédentes et une unité de traitement de signal (9) pour traiter le signal électrique (8) fourni à l'unité de traitement de signal (9) à partir des capteurs (3), de préférence au moins partiellement par une connexion sans fil.

13. Dispositif (1) selon la revendication 12, dans lequel les signaux électriques (8) fournis à l'unité de traitement de signal (9) sont traités de manière à créer une sortie dans une ou plusieurs des formes suivantes ou une combinaison de celles-ci
- la sortie est un signal (11) fonction de l'intensité d'un impact sur la feuille (2);
- la sortie est un signal (11) fonction d'une variation d'intensité ou de fréquence de la vibration dans la feuille (2) ;
- la sortie est un signal (11) fonction de la position d'un impact sur la feuille (2);
- la sortie est un son ou un signal fonction de la distribution de tension ou d'une variation de la distribution de tension dans la feuille (2) ;
- la sortie est une indication concernant la distribution de tension dans la feuille (2) utilisée pour l'accord de la feuille (2) ; ou
- la sortie est une indication concernant la quantité de tension statique dans la feuille (2), utilisée pour l'accord de la feuille (2).
